# EUROPEAN PATENT SPECIFICATION

(11) **EP 0 500 155 B1**
(45) Date of publication and mention of the grant of the patent: **10.05.1995**
(21) Application number: 92200189.6
(22) Date of filing: 23.01.1992
(51) Int. Cl.: A01G 9/10

(54) **Pressed soil pot**
Gepresster Erdetopf
Pot de terre pressé

(30) Priority: 21.02.1991 NL 9100308
(43) Date of publication of application: 26.08.1992
(73) Proprietor: Visser 's-Gravendeel Holding B.V., NL-3295 XB 's-Gravendeel (NL)
(72) Inventor: Visser, Anthony, NL-3295 RN 's-Gravendeel (NL)
(74) Representative: Eveleens Maarse, Pieter

(56) References cited:
- BE-A- 539 753
- FR-A- 2 624 340
- NL-A- 6 913 850

## Description

The invention relates to a pressed soil pot of substantially rectangular cross section.

Such soil pots are generally known in the horticultural industry.

Manufacture of such rectangular soil pots requires a considerable quantity of soil.

This soil is rather costly; it must after all comply with strict requirements in respect of nutrient content and the absence of bacteria and other disease organisms.

The object of the present invention is to provide a soil pot for which less soil is required.

This object is achieved by a soil pot provided with at least one groove arranged in a wall of the soil pot.

Due to the arranging of a groove the soil requirement for such a soil pot is much smaller so that the cost price of thus manufactured soil pots is lower than that of known soil pots. Such soil pots moreover have a low weight.

The present invention also relates to a method for manufacturing such soil pots, wherein soil is poured into a tray, the soil is compressed from above and the thus formed compressed layer is divided into soil pots, which method is characterized in that the grooves are arranged after compressing.

The invention also relates to a device for manufacturing soil pots according to the above stated method, which device comprises a pressing mould in addition to a pressing member movable into the pressing mould and a cutting member that is movable into the pressing mould, and wherein the device is characterized by an element movable to a position above the pressing mould for arranging grooves in the compressed layer.

The present invention will subsequently be elucidated with reference to the annexed drawings, in which:
fig. 1 shows a perspective view of a layer of soil compressed to a number of soil pots according to a first embodiment of the invention;
fig. 2 shows a perspective view of a single soil pot according to the first embodiment;
fig. 3 shows a perspective view of a soil pot according to a second embodiment;
fig. 4 is a perspective view according to a third embodiment;
fig. 5 is a perspective view of a soil pot according to a fourth embodiment;
fig. 6 is a perspective view of a device for manufacturing soil pots according to the invention;
fig. 7 shows a partly broken away perspective detail view of the device depicted in fig. 6;
fig. 8 is a perspective, partly broken away detail view of a second embodiment of a device according to the invention;
fig. 9 is a perspective detail view of a third embodiment of a device according to the invention;
fig. 10 is a perspective detail view of a fourth embodiment of a device according to the invention; and
fig. 11 is a perspective view of a fifth embodiment of the device according to the invention.

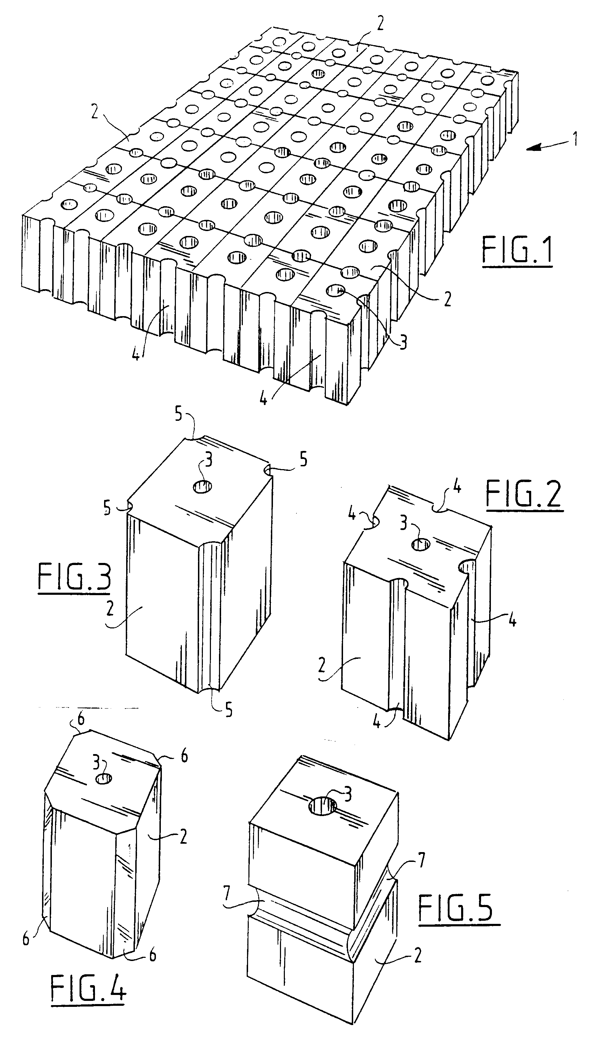

Shown in fig. 1 is a layer of compressed soil 1 which is divided into a number of soil pots 2. The drawing shows the situation directly after compressing and mutual separation of the soil pots.

Each soil pot 2 has the form of a rectangular parallelepiped and in the present embodiment a square horizontal cross section.

It can be seen from fig. 1 that in the centre of the top surface of each soil pot 2 is arranged a hole 3 which is intended for arranging a seed capsule. In addition each side wall of the soil pots 2 is provided with a groove 4. This groove 4 extends in vertical direction and can be obtained by boring or punching from above.

Fig. 2 shows a single soil pot 2 as shown in fig. 1 in group arrangement. It can also be seen here that arranged in each side wall of the soil pot 2 is a groove 4 which has a semi-circular section. It will be apparent that in the case of group manufacture of such soil pots a semi-circular section is attractive since such a groove can be arranged in two adjoining pots with one boring or punching movement. It is also possible to arrange the grooves on the edges.

An example hereof is shown in fig. 3. Grooves 5 are here arranged on all four edges. It will be apparent that such grooves having the form of a quarter-circle can also be easily obtained by boring. With the use of a drill of the same diameter as in the embodiment shown in fig. 2 the quantity of removed soil would however amount to about half; the surface area of four quarter-circles amounts to half the surface area of four semi-circles.

The embodiment of fig. 2 has the advantage over the embodiment of fig. 3 that mechanically it can be handled more easily, since a pusher element can engage on one side on such a soil pot over the whole breadth of the side (with the exception of course of the groove arranged in the middle) and a greater moment can be transmitted than with the embodiment of fig. 3, wherein a pusher can only engage over the breadth of the soil pot less twice the radius of the grooves on the corners.

Fig. 4 further shows an embodiment wherein a chamfering is arranged on the edges, for instance by cutting. Such an embodiment has properties roughly corresponding with the embodiment of fig. 3.

Finally, fig. 5 shows an embodiment of the soil pot according to the present invention wherein a groove is arranged in horizontal direction. Although such a shaped groove can be arranged simultaneously with compressing of the soil pot, but can only be arranged in a separate operation, such a soil pot can be attractive in some cases; this has the same properties with respect to handling as the embodiment of a soil pot as shown in fig. 2.

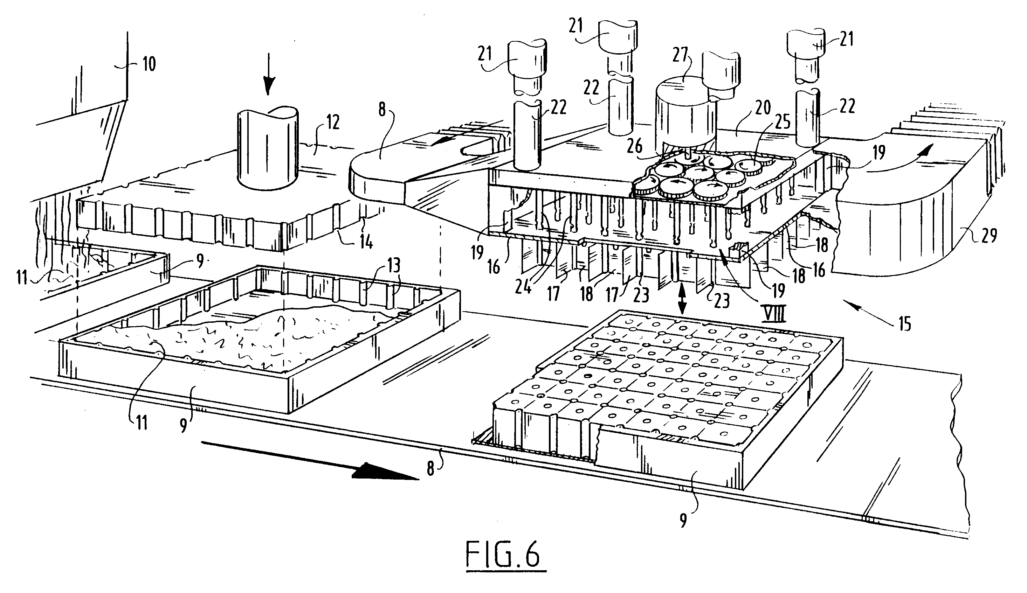

Fig. 6 shows a device for manufacturing soil pots. This device comprises a conveyor belt 8 on which moulds 9 are placed. At a first position the moulds 9 are filled with soil 11 by a feed hopper 10. The conveyor belt subsequently moves one position further and, when the thus formed tray 9 has arrived at the second position, a press 12 is moved downward until the soil 11 present in tray 9 is sufficiently compressed. The shape of the press 12 wholly corresponds here with the internal shape of the tray 9.

In the present embodiment the edges of the trays 9 are provided with semi-circular protrusions 13 for forming of the grooves 5 in the soil pot according to the embodiment of fig. 3. Corresponding notches 14 are therefore arranged in the press 12.

After pressing, the press 12 moves upward again and the tray 9 is filled with a layer of compressed material.

The tray then moves over the conveyor belt 8 to a following position above which a cutting device 15 is placed. The cutting device 15 is formed by a plate 16 on the underside whereof vertically extending, intersecting cutting plates 17, 18 are arranged. These cutting plates 17, 18 serve to divide the compressed tray into separate soil pots.

The plate 16 is connected by means of four supports 19 to a casing 20. The top part of casing 20 is movable in vertical direction by means of cylinders 21. The piston rods 22 are herein arranged on the top side of the casing 20.

Arranged at the point of each intersection of the cutting plates 17, 18 is a vertically extending hollow pipe 23. Drills 24 extend through the hollow pipes 23, which drills 24 extend at the top through the plate 16 into the casing 20. In the casing 20 a gear wheel 25 is arranged on the top part of each drill 23. The gear wheels 25 are each arranged such that they mutually engage in accordance with a pattern of coordinates. One of the gear wheels 25 is provided with a continuous shaft 26 which is driven by an electric motor 27 placed on top of the casing 20. All gear wheels 25, and therewith all drills 24, are driven herewith.

The space between the casing 20 and plate 16 is connected to an air feed duct 28 and an air discharge duct 29. By supplying air through the feed duct 28 and discharging it through the discharge duct 29 an air flow is generated through the space between casing 20 and plate 16 which carries away soil dislodged by the drills.

It will be apparent that, when the cutting device 15 is moved downward into the tray 9, the compressed soil is divided into soil pots by the cutting plates 17, 18, while the relevant holes forming the relevant grooves in the soil pots are arranged by the drills 25.

It will likewise be apparent that by adapting the configuration of the drills the pattern of the holes for arranging can be altered; it is for instance possible in the embodiment drawn in fig. 6 to make a groove on each edge of the soil pot, while in order to make the holes for the seed capsules drills in the middle of the spaces bounded by the plates 17, 18 must be used. It is however also possible to form these latter holes by pressing.

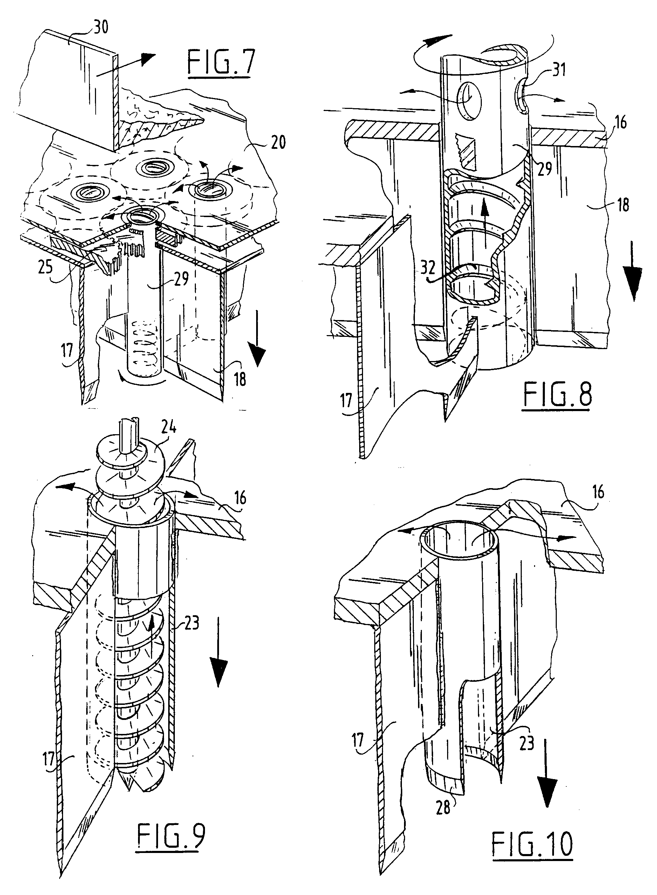

Fig. 9 shows a detail view of the embodiment depicted in fig. 6; use is herein made of a twist drill for drilling the required holes.

Shown in fig. 10 is an alternative embodiment wherein no separate drill is arranged in the hollow pipe 23, but wherein the hollow pipe 23 is provided on its underside with a sharp cutting edge 28.

It can be seen from the above discussed embodiments according to fig. 9 and 10 that the drill is always arranged here in the middle of a side wall. These devices therefore serve to obtain a soil pot according to the embodiment as shown in fig. 2.

The following embodiments of the cutting device 15 are once again suitable for obtaining a soil pot according to the embodiment of fig. 3. Arranged herein at the positions where the plates 17, 18 intersect are hollow drills 29 which are again also driven by gear wheels 25.

In the embodiment shown in fig. 7 the plate 16 is omitted and the casing 20 is arranged directly on the top of the plates 17, 18. This creates the possibility of discharging the soil coming out of the hollow drill 29 from the top side of the casing 20. A scraper member 30 is arranged for this purpose.

In the embodiment shown in fig. 8, however, use is again made of the configuration of fig. 6; the discharge of the soil takes place herein through holes 30 arranged in the hollow drill 29 to the space between the plate 16 and the gear casing 20. In both cases the hollow drill 29 is provided with internal thread 31.

In the above embodiments the grooves reducing the volume of the soil pots are always formed simultaneously. It is of course possible to form the grooves one by one. The device required for this purpose will therefore be considerably smaller and simpler, although the time needed for arranging the grooves will then also be much longer. It is for instance conceivable that after drilling out a groove the single drill moves to a soil collection position, deposits the drilled out soil there and subsequently moves towards a following boring position.

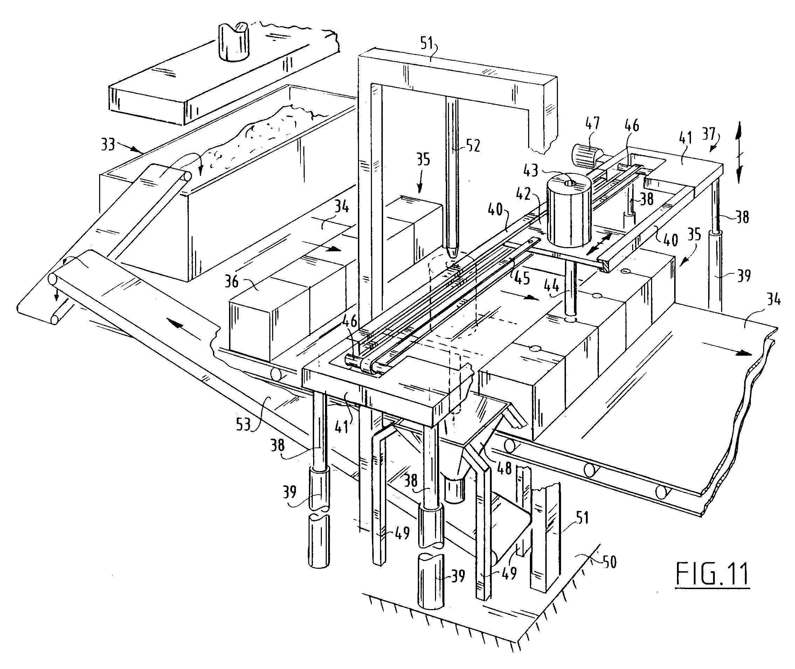

In the embodiment shown in fig. 11 rows 35 of soil pots 36 are supplied by a soil press 33 over a conveyor belt 34. In a stepwise movement of the conveyor belt 34 these rows 35 are carried beneath a drilling device according to the invention. The drilling device is formed by a frame 37 on the four edges of which are arranged downward extending piston rods 38. The piston rods extend into cylinders 39. The latter are each fixed to a base with their underside. It is thus possible to adjust the frame 37 in height by means of the pistons 39. The frame is formed by two U-profiles 40, each connected at their ends by cross pieces 41.

A plate 42 is arranged movably in the mutually facing open sides of the U-profiles. Arranged on the plate 42 is an electric motor 43 whereof the shaft is directly connected to a downward extending hollow drill 44.

The hollow drill 44 is driven with the electric motor 43.

Arranged on both sides of plate is a strip of flexible material 45 which is trained around shafts 46 arranged in the cross pieces 41.

One of the shafts is driven by means of an electric motor 47 arranged adjacent to the frame. Using the motor 47 the plate 42, and therewith the hollow drill 44, can be moved in transverse direction of the conveyor belt 34.

The frame 37 not only extends over the conveyor belt 34 but also over a hopper 48 arranged adjacent to the conveyor belt. The fixedly arranged hopper also rests by means of legs 49 on a base 50. A downward extending mandrel 52 is arranged in a second frame 51 above the hopper.

Arranged beneath the hopper 48 is a conveyor belt 53 leading to the soil pot press 33.

When the conveyor belt 34 is stationary, holes are bored at the relevant positions in the soil pots by means of the rotationally driven hollow drill 44, wherein the up and downward movement is caused by means of the cylinders 39. When the hollow drill is filled with soil, the plate 42 is moved above the hopper 48 and the whole frame is moved upward, wherein the mandrel 52 extends into the drill 44 and the drilled out soil present therein is pressed out. The device then moves back again and the following hole is bored.

The soil coming from the hollow drill falls into the hopper 48 and is carried away by a conveyor belt 53 to the press 33.

It is also possible to employ a stationary hollow pipe or another type of drill.

## Claims

1. Pressed soil pot of substantially rectangular cross section **characterized by** at least one groove arranged in a wall of the soil pot.

2. Soil pot as claimed in claim 1, **characterized in that** the at least one groove extends vertically.

3. Soil pot as claimed in claim 1 or 2, **characterized in that** the grooves are each arranged in the middle of a side wall.

4. Soil pot as claimed in claim 3, **characterized in that** the groove has a semi-circular section.

5. Soil pot as claimed in claim 2, **characterized in that** the grooves are each arranged on a vertical edge.

6. Soil pot as claimed in claim 5, **characterized in that** the grooves each have a quarter-circular section.

7. Method for manufacturing soil pots, wherein soil is poured into a tray, the soil is compressed from above and the thus formed compressed layer is divided into soil pots, **characterized in that** after compressing at least one groove is arranged in the walls.

8. Method as claimed in claim 7, **characterized in that** the grooves are arranged simultaneously with division of the compressed layer into soil pots.

9. Method as claimed in claim 7, **characterized in that** the grooves are arranged before the compressed layer is divided into soil pots.

10. Method as claimed in claim 7, 8 or 9, **characterized in that** the grooves are formed by drilling.

11. Method as claimed in claim 7, 8 or 9, **characterized in that** the grooves are formed by cutting.

12. Method as claimed in any of the claims 7-11, **characterized in that** all grooves are formed simultaneously.

13. Device for manufacturing soil pots comprising a pressing mould, a pressing member movable into the pressing mould and a cutting member that is movable into the pressing mould, **characterized by** an element movable to a position above the pressing mould for arranging grooves in the compressed layer.

14. Device as claimed in claim 13, **characterized in that** the element comprises at least one member movable into the compressed tray and movable in horizontal direction above the compressed layer into all positions where a groove has to be made.

15. Device as claimed in claim 13, **characterized in that** the number of members corresponds with the number of grooves to be arranged.

16. Device as claimed in claim 13, 14 or 15, **characterized in that** the member is a drill.

17. Device as claimed in claim 16, **characterized in that** the drill is a twist drill.

18. Device as claimed in claim 16, **characterized in that** the member for forming grooves is a hollow pipe with internal screw thread.

## Patentansprüche

1. Gepreßter Erdetopf von im wesentlichen rechteckigem Querschnitt,
gekennzeichnet durch mindestens eine in einer Wand des Erdetopfes angeordnete Rille.

2. Erdetopf nach Anspruch 1, dadurch gekennzeichnet,
daß sich die mindestens eine Rille vertikal erstreckt.

3. Erdetopf nach Anspruch 1 oder 2, dadurch gekennzeichnet,
daß die Rillen jeweils in der Mitte einer Seitenwand angeordnet sind.

4. Erdetopf nach Anspruch 3, dadurch gekennzeichnet,
daß die Rille einen halbkreisförmigen Querschnitt aufweist.

5. Erdetopf nach Anspruch 2, dadurch gekennzeichnet,
daß die Rillen jeweils auf einer vertikalen Kante angeordnet sind.

6. Erdetopf nach Anspruch 5, dadurch gekennzeichnet,
daß die Rillen jeweils einen viertelkreisförmigen Querschnitt aufweisen.

7. Verfahren zum Herstellen von Erdetöpfen, bei dem die Erde in eine Schale geschüttet wird, die Erde von oben zusammengedrückt wird und die so gebildete zusammengedrückte Schicht in Erdetöpfe unterteilt wird,
dadurch gekennzeichnet,
daß nach dem Zusammendrücken mindestens eine Rille in den Wänden angeordnet wird.

8. Verfahren nach Anspruch 7, dadurch gekennzeichnet,
daß die Rillen gleichzeitig mit der Unterteilung der zusammengedrückten Schicht in Erdetöpfe angeordnet werden.

9. Verfahren nach Anspruch 7, dadurch gekennzeichnet,
daß die Rillen angeordnet werden, bevor die zusammengedrückte Schicht in Erdetöpfe unterteilt wird.

10. Verfahren nach Anspruch 7, 8 oder 9, dadurch gekennzeichnet,
daß die Rillen durch Bohren gebildet werden.

11. Verfahren nach Anspruch 7, 8 oder 9, dadurch gekennzeichnet,
daß die Rillen durch Schneiden gebildet werden.

12. Verfahren nach einem der Ansprüche 7 bis 11, dadurch gekennzeichnet,
daß alle Rillen gleichzeitig gebildet werden.

13. Vorrichtung zum Herstellen von Erdetöpfen mit einer Preßform, einem in die Preßform bewegbaren Preßteil und einem Schneideteil, das in die Preßform bewegbar ist,
gekennzeichnet durch ein Element, das zu einer Position oberhalb der Preßform zum Anordnen von Rillen in der zusammengedrückten Schicht bewegbar ist.

14. Vorrichtung nach Anspruch 13, dadurch gekennzeichnet,
daß das Element mindestens ein Teil aufweist, das in die zusammengedrückte Schale bewegbar ist und in horizontale Richtung oberhalb der zusammengedrückten Schicht in alle Positionen bewegbar ist, wo eine Rille zu bilden ist.

15. Vorrichtung nach Anspruch 13, dadurch gekennzeichnet,
daß die Zahl der Teile der Zahl der anzuordnenden Rillen entspricht.

16. Verfahren nach Anspruch 13, 14 oder 15, dadurch gekennzeichnet,
daß das Teil ein Bohrer ist.

17. Vorrichtung nach Anspruch 16, dadurch gekennzeichnet,
daß der Bohrer ein Wendelbohrer ist.

18. Vorrichtung nach Anspruch 16, dadurch gekennzeichnet,
daß das Teil zum Bilden von Rillen ein hohles Rohr mit einem internen Schraubengewinde ist.

## Revendications

1. Pot de terre pressé de section transversale sensiblement rectangulaire, caractérisé par au moins une rainure disposée dans une paroi du pot de terre.

2. Pot de terre selon la revendication 1, caractérisé en ce que la au moins une rainure s'étend verticalement.

3. Pot de terre selon la revendication 1 ou 2, caractérisé en ce que les rainures sont chacune disposées au milieu d'une paroi latérale.

4. Pot de terre selon la revendication 3, caractérisé en ce que la rainure a une section semicirculaire.

5. Pot de terre selon la revendication 2, caractérisé en ce que les rainures sont chacune disposées sur un bord vertical.

6. Pot de terre selon la revendication 5, caractérisé en ce que les rainures possèdent chacune une section en quart de cercle.

7. Procédé de fabrication de pots de terre, dans lequel la terre est versée dans un plateau, la terre est comprimée par le dessus et la couche comprimée ainsi formée est divisée en pots de terre, caractérisé en ce qu'après la compression, au moins une rainure est fabriquée dans les parois.

8. Procédé selon la revendication 7, caractérisé en ce que les rainures sont fabriquées simultanément à la division de la couche comprimée en pots de terre.

9. Procédé selon la revendication 7, caractérisé en ce que les rainures sont fabriquées avant que la couche comprimée soit divisée en pots de terre.

10. Procédé selon la revendication 7, 8 ou 9, caractérisé en ce que les rainures sont fabriquées par perçage.

11. Procédé selon la revendication 7, 8 ou 9, caractérisé en ce que les rainures sont fabriquées par découpe.

12. Procédé selon l'une quelconque des revendications 7 à 11, caractérisé en ce que toutes les rainures sont fabriquées simultanément.

13. Appareil de fabrication de pots de terre comprenant un moule de pressage, un organe de pressage mobile placé dans le moule de pressage et un organe de coupe qui est mobile dans le moule de pressage, caractérisé par un élément mobile vers une position située au-dessus du moule de pressage et destiné à fabriquer des rainures dans la couche comprimée.

14. Appareil selon la revendication 13, caractérisé en ce que l'élément comprend au moins un organe mobile dans le plateau comprimé et mobile dans une direction horizontale au-dessus de la couche comprimée dans toutes les positions dans lesquelles une rainure doit être fabriquée.

15. Appareil selon la revendication 13, caractérisé en ce que le nombre d'organes correspond au nombre de rainures à fabriquer.

16. Appareil selon la revendication 13, 14 ou 15, caractérisé en ce que l'organe est un foret.

17. Appareil selon la revendication 16, caractérisé en ce que le foret est un foret helicoïdal.

18. Appareil selon la revendication 16, caractérisé en ce que l'organe destiné à fabriquer des rainures est un tube creux muni d'un filetage de vis interne.
